Europäisches Patentamt

European Patent Office

Office européen des brevets

(19)

(11) Numéro de publication: **0 196 963**
**B1**

(12) **FASCICULE DE BREVET EUROPEEN**

(45) Date de publication du fascicule du brevet:
26.07.89

(51) Int. Cl.⁴: **G 02 B 6/34**

(21) Numéro de dépôt: **86400573.1**

(22) Date de dépôt: **18.03.86**

(54) **Multiplexeur-démultiplexeur de longueurs d'ondes corrigé des aberrations géométriques et chromatiques.**

(30) Priorité: **20.03.85 FR 8504134**

(43) Date de publication de la demande:
**08.10.86 Bulletin 86/41**

(45) Mention de la délivrance du brevet:
**26.07.89 Bulletin 89/30**

(84) Etats contractants désignés:
**BE CH DE FR GB LI**

(56) Documents cités:
**EP-A- 0 083 542**
**EP-A- 0 099 823**
**EP-A- 0 102 264**
**EP-A- 0 115 443**
**EP-A- 0 121 482**
**EP-A- 0 121 812**

(73) Titulaire: **INSTRUMENTS S.A., 25, avenue de l'Opéra,
F-75001 Paris (FR)**

(72) Inventeur: **Laude, Jean-Pierre, 3 rue des Graveriots,
F-91690 St. Cyr La Rivière par Saclas (FR)**

(74) Mandataire: **Phélip, Bruno et al, c/o Cabinet Harlé &
Phélip 21, rue de La Rochefoucauld, F-75009 Paris (FR)**

## Description

La présente invention concerne un multiplexeur-démultiplexeur de longueurs d'ondes à séparateur de longueurs d'ondes et miroir concave, plus spécialement destiné à constituer un composant pour des installations de télétransmission par fibres optiques.

Elle constitue en particulier un perfectionnement à la fois au brevet publié sous le n° 2 543 768 et au brevet français publié sous le n° 2 519 148.

On connaît par le brevet français publié sous le n° 2 479 981, et plus particulièrement par sa deuxième addition publiée sous le n° 2 496 260, un ensemble monobloc permettant de regrouper dans une fibre de transmission à longue distance plusieurs lumières de longueurs d'ondes différentes amenées par autant de fibres d'entrée ou bien, en fonctionnement inverse, de séparer et de répartir vers plusieurs fibres de sortie plusieurs lumières de longueur d'onde différente, amenées ensemble par une même fibre de transmission.

Dans un tel dispositif où les fibres d'entrée et de sortie sont disposées au voisinage immédiat du foyer d'un miroir concave, celui-ci dans un fonctionnement en démultiplexeur par exemple, transforme le faisceau de lumières mélangées reçues de la fibre d'entrée en un faisceau parallèle vers un réseau plan de diffraction, et focalise en retour sur les extrémités des fibres de sortie, les différents faisceaux parallèles monochromatiques diffractés par le réseau.

Le brevet français publié sous le n° 2 519 148 décrit un dispositif analogue dans lequel la séparation des longueurs d'ondes est assurée par des miroirs sélectifs à filtre multidiélectrique.

De tels dispositifs, qu'il soient à réseaux ou à miroirs diélectriques, donnent de meilleurs résultats avec un miroir concave parabolique plutôt que sphérique. En effet les aberrations sphériques d'un miroir sphérique ne permettent pas d'atteindre le même degré de qualité de stigmatisme qu'avec un miroir parabolique.

Le brevet français publié sous le n° 2 543 768 apporte un premier perfectionnement, appliqué à un dispositif à réseau, par la constitution d'un dioptre plan séparant deux milieux optiques d'indices différents entre le miroir concave et le réseau, rendant ainsi possible l'utilisation d'un simple miroir sphérique. Les aberrations sphériques du miroir peuvent en effet alors être corrigées par un choix convenable des indices des deux milieux du dioptre.

Malheureusement, il se révèle qu'en pratique la correction des aberrations sphériques par un dioptre plan impose un écart relativement important des indices n et n', et par exemple tels que $n \geqslant 2n' / \sqrt{3}$. Il en résulte, avec les verres actuels, des écarts de dispersion chromatique également importants qui entraînent des aberrations chromatiques et peuvent obliger à incliner le plan d'affleurement des fibres optiques de réception ou d'émission des diverses longueurs d'ondes, ce qui accroît les difficultés de réalisation industrielle.

Ce qui vient d'être dit sur les inconvénients de l'utilisation d'un dioptre plan pour corriger les aberrations sphériques dans un composant utilisant un miroir concave sphérique et une séparation de longueurs d'ondes constituées par un réseau de diffraction, d'appliquerait de la même façon à un composant utilisant un miroir concave et une séparation de longueurs d'ondes constituées par au moins un miroir sélectif à filtre multidiélectrique tel que décrit dans le brevet français publié sous le n° 2 519 148.

La présente invention qui s'applique de la même façon à l'un ou l'autre type de composant, permet donc à la fois la correction des aberrations sphériques d'un miroir concave sphérique de réalisation industrielle aisée, et la correction des aberrations chromatiques dues à la présence d'un dioptre.

L'invention concerne donc un multiplexeur-démultiplexeur du type où les lumières de longueurs d'ondes différentes à mélanger ou à séparer sont portées par des fibres optiques de transmission dont les extrémités sont disposées au voisinage immédiat du foyer d'un miroir concave associé à un système de séparation de longueurs d'ondes comprenant au moins quatre éléments transparents collés les uns aux autres, successivement:

a) un élément porte-fibres dans lequel sont noyées les fibres d'entrée et de sortie, avec leurs extrémités affleurant sur une surface plane de contact avec l'élément suivant,

b) un élément portant le système de séparation de longueurs d'ondes, avec une surface plane de contact avec l'élément porte-fibres et une face plane opposée de contact avec l'élément suivant,

c) un élément intermédiare de même indice n que l'élément portant le système de séparation de longueurs d'ondes, avec une face plane de contact avec l'élément portant le système de séparation de longueurs d'ondes, et

d) un élément miroir avec une face sphérique concave vers l'élément intermédiaire et traitée pour constituer ledit miroir concave et d'indice n'différent de l'indice n de l'élément intermédiaire, caractérisé en ce que l'élément intermédiaire a une face sphérique de contact avec l'élément suivant, et en ce que l'élément miroir a une face sphérique de contact avec l'élément intermédiaire et en ce que les matériaux des éléments intermédiaire et miroir sont choisis de façon à présenter des dispersions chromatiques les plus voisines possible, la courbure de la face sphérique entre l'élément miroir et l'élément intermédiaire et le sens de sa concavité par rapport à celle du miroir étant déterminé en fonction des indices n et n' pour compenser les aberrations sphériques longitudinales du miroir.

Selon une forme de réalisation particulièrement avantageuse, l'élément intermédiaire est lui-même constitué en deux parties séparées par une surface plane.

L'invention sera mieux comprise en se référant à des modes de réalisation particuliers donnés à titre d'exemple et représentés par les dessins annexés.

- La figure 1 est une coupe médiane d'un composant réalisé selon l'invention et utilisant un réseau plan de diffraction,

- la figure 2 est une figure correspondante pour un composant utilisant deux miroirs plans pour la séparation des longueurs d'ondes, un miroirs étant entièrement réfléchissant et l'autre étant un miroir sélectif à couches multidiélectriques,

- la figure 3 représente une variante du dispositif de la figure 1, avec un élément intermédiaire lui-même en deux parties.

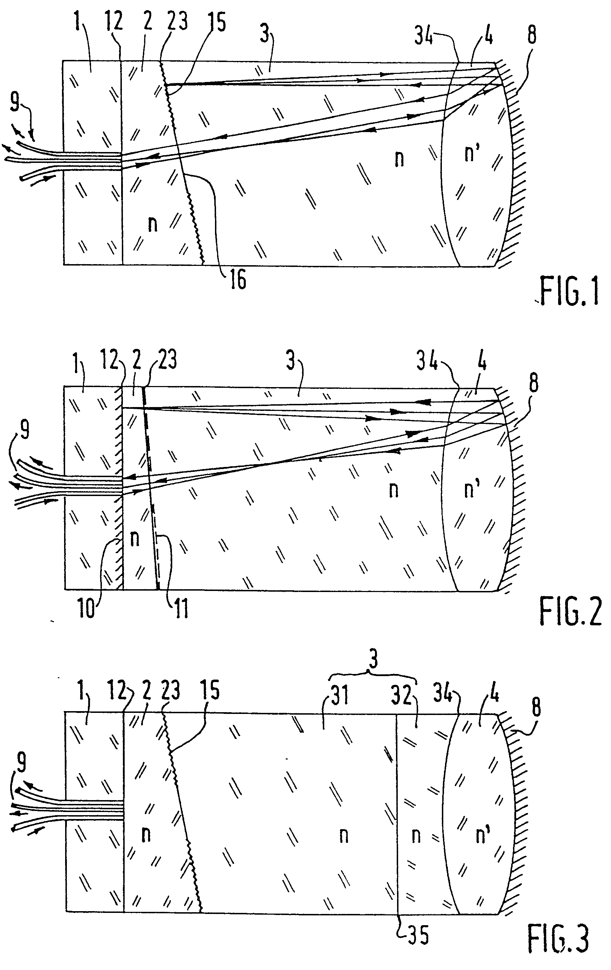

En se référant tout d'abord à la figure 1, on verra que le dispositif représenté assure la même fonction que celui décrit à la figure 1 de l'addition publiée sous le n° 2 496 260, mais il est ici constitué en quatre éléments collés successivement les uns aux autres. L'élément 1 est un simple support des fibres optiques d'entrée et de sortie. L'élément 2 n'est que le support du réseau. L'élément 3 est un élément intermédiaire et l'élément 4 ne comporte que le miroir concave.

L'élément porte-fibres/pourra avantageusement être réalisé en utilisant le procédé décrit par le brevet français publié sous le n° 2 411 424 et concernant un connecteur de fibres optiques; il suffira de réaliser un seul des deux blocs qui seraient nécessaires pour un connecteur. Le brevet publié sous le n° 2 543 768 rappelle plus en détail une façon préférentielle de monter les fibres dans le bloc 1 et de faire affleurer leurs extrémités sur le plan de joint 12. L'élément porte-réseau 2 est un bloc transparent dont une face est polie pour constituer le plan de joint 12 avec l'élément 1 et dont l'autre face porte un réseau de diffraction plan 15. Le réseau 15 est réalisé de façon usuelle, c'est-a-dire par copie d'un réseau original gravé ou holographique, puis recouvrement d'une couche métallique réfléchissante. Pour permettre le passage sans déviation de la lumière en provenance des fibres 9 ou y aboutissant, il est nécessaire de neutraliser localement le réseau 15 dans la zone 16 où il traverse le cône d'ouverture des fibres, c'est-à-dire la zone angulaire d'acceptance des rayons lumineux dans l'âme des fibres. Pour neutraliser le réseau dans cette zone 16, on procèdera par photolithographie pour faire disparaître localement la couche réfléchissante. On observera que ceci n'entraîne aucune altération du réseau en dehors de la zone traitée et en particulier à la limite de cette zone. Par ailleurs, lorsque la face portant le réseau sera collée sur l'élément intermédiaire 3 de même indice que l'élément 2, il suffira d'utiliser comme colle une résine de même indice que celle de la résine formant le support du réseau 15, celle-ci étant elle-même choisie pour présenter un indice le plus proche possible de celui des deux blocs 2 et 3. Ainsi en remplissant les sillons du support de réseau la colle rétablira une continuité optique complète permettant le passage sans déviation des rayons lumineux.

L'élément intermédiaire 3 présente une face plane polie pour collage sur le réseau 15 de l'élément 2 et une face sphérique 34 pour former la surface de joint avec l'élément 4.

Sur l'élément 4 la face opposée à la surface sphérique de joint 34 est elle-même une surface sphérique traitée pour former un miroir concave 8. L'élément 4 est en matériau d'indice n' différent de l'indice n des éléments 2 et 3. Ici n est inférieur à n' et la concavité de la surface 34 est opposée à celle du miroir 8. Si le choix des indices n et n' conduisait à prendre n inférieur à n' la concavité de la surface 34 devrait alors être de même sens que celle du miroir 8.

On notera que le fonctionnement optique de l'ensemble ainsi réalisé est tout à fait identique à celui de l'ensemble décrit dans le brevet 2 496 260. Dans le cas d'un fonctionnement en démultiplexeur par exemple, la lumière mélangée est amenée par l'une des fibres 9 dont l'extrémité est au foyer apparent du miroir 8, c'est-à-dire à l'emplacement de l'image de son foyer réel dans le dioptre 34. Après réfraction par le dioptre 34 les rayons issus de l'extrémité de la fibre sont donc renvoyés par le miroir 8 en un faisceau parallèle vers le réseau 15 qui le disperse en autant de faisceaux parallèles que de longueurs d'ondes dans la lumière mélangée. Par un chemin inverse chaque faisceau parallèle est focalisé sur l'extrémité d'une fibre de sortie 9. Mais ici le choix des indices différents pour les éléments 3 et 4 permet de corriger les aberrations du miroir sphérique 8 de telle sorte qu'il n'y aura inconvénient à utiliser un miroir sphérique beaucoup plus facile à réaliser industriellement qu'un miroir parabolique.

En outre, on a choisi pour les éléments 3 et 4 des aires de dispersion chromatique sensiblement égales permettant de ne pas introduire d'aberrations chromatiques. La courbure du dioptre sphérique 34 est alors choisie en fonction des indices n et n' des matériaux de façon à compenser également l'aberration sphérique du miroir.

Tout ce qui précède est tout à fait transposable au cas de la figure 2 où l'élément 2 est traité sur la face 12 pour constituer un miroir plan 10, sauf bien entendu dans la zone faisant directement face aux extrémités des fibres 9. La face opposée 23, à l'exception de la zone centrale 16 qui coupe le cône d'ouverture des fibres, est traitée en couches multidiélectriques pour constituer un miroir sélectif ne réfléchissant qu'une certaine bande de longueurs d'ondes et laissant passer les autres sans déviation. Ainsi, le faisceau de lumière mélangée amené par l'une des fibres 9 dont l'extrémité sera au voisinage immédiat du foyer apparent du miroir 8 sera renvoyé en un faisceau parallèle vers les miroirs 10 et 11. Une partie de la lumière sera réfléchie par le miroir 11 et refocalisée par le miroir 8 vers une autre de fibres 9; l'autre partie de la lumière traversant le miroir 11 ne sera réfléchie que par le miroir 10 et renvoyée selon une direction différent vers le miroir 8 qui le focalisera vers une troisième fibre 9.

On se référera enfin à la figure 3 qui montre une variante de réalisation facilitant le réglage du dispositif. Ici l'élément intermédiaire 3 est en deux parties 31 et 32, toutes deux par exemple en un matériau de même indice n que l'élément 2, et séparées par un plan de joint 35. Pour les modes de réalisation selon les figures 1 et 2, le réglage d'alignement des fibres ne peut s'effectuer avant collage définitif que par glissement plan du bloc portefibres 1 sur le plan de joint 12. Dans la réalisation selon la figure 3, on peut également régler avant collage l'ensemble 32–4 par rapport au bloc 31 et au reste du composant par glissement sur la plan de jont 35.

Exemple

On a réalisé un ensemble selon la figure 1 avec:
– pour les éléments 2 et 3 un verre vendu sous la référence RGN6 par Schott, d'indice variant de 1,58015 pour une longueur d'onde de 875 nm à 1,58420 pour une longueur d'onde de 706,5 nm,
– pour l'élément 4 un verrre vendu sous la référence BK7 par Schott, d'indice variant de 1,509326 pour une longueur d'onde de 875 nm à 1,51289 pour une longueur d'onde de 706,5 nm,
– un rayon de 130,19 mm pour la face réfléchissante du miroir 8,
– un rayon de 115,50 mm pour la surface sphérique 34,
– une distance de 63,826 mm entre le plan 12 d'extrémite des fibres et le sommet de la surface sphérique 34. Il en résulte une focale de 71,529 mm et, pour la plage de longueurs d'ondes de 875 à 706 nm le déplacement longitudinal du foyer en fonction de la longueur d'onde et de la hauteur d'incidence des rayons dans le système, pour des fibres d'ourverture ON = 0,29, est inférieur à ± 15 microns.

Dans une réalisation où le verre IRGN6 est remplacé par un verre vendu par le même fournisseur sous la référence PSK52, le déplacement longitudinal est réduit à ± 8 microns pour une focale de 72,137 mm.

Bien entendu l'invention n'est pas strictement limitée aux modes de réalisation qui ont été décrits à simple titre d'example, mais elle couvre également les réalisations qui n'en différeraient que par des détails, par des variantes d'exécution ou pour par l'utilisation de moyens équivalents.

**Revendications**

Multiplexeur-démultiplexeur du type où les lumières de longueurs d'onde différentes à mélanger ou à séparer sont portées par des fibres optiques de transmission dont les extrémités sont disposées au voisinage immédiat du foyer d'un miroir concave (8) associé à un système (15) de séparation de longueurs d'ondes, comprenant au moins quatre éléments transparents collés les uns aux autres, successivement:
a) un élément porte-fibres (1) dans lequel sont noyés les fibres (9) d'entrée et de sortie, avec leurs extrémités affleurant sur une surface plane (12) de contact avec l'élément suivant,
b) un élément (2) portant le système (15) de séparation de longueurs d'ondes, avec une surface plane (12) de contact avec l'élément porte- fibres (1) et une face plane opposée (23) de contact avec l'élément suivant,
c) un élément intermédiaire (3) de même indice n que l'élément (2) portant le système (15) de séparation de longueurs d'ondes, avec une face plane (23) de contact avec l'élément portant le système de separation de longueurs d'ondes (2) et
d) un élément miroir (4) avec une face sphérique (8), concave vers l'élément intermédiaire (3), et traitée pour constituer ledit miroir concave, et d'indice n' différent de l'indice n de l'élément intermédiaire (3), caractérisé en ce que l'élément intermédiaire a une face sphérique (34) de contact avec l'élément suivant, en ce que l'élément miroir a une face sphérique (34) de contact avec l'élément intermédiaire (3), et en ce que les matériaux des éléments intermédiaire (3) et miroir (4) étant choisis de façon à présenter des dispersions chromatiques les plus voisines possible, la courbure de la face sphérique (34) entre l'élément miroir (4) et l'élément intermédiaire (3) et le sens de sa concavité par rapport à celle du miroir étant déterminé en fonction des indices n et n' pour compenser les aberrations sphériques longitudinales du miroir.

2. Multiplexeur-démultiplexeur selon la revendication 1, caractérisé par le fait que le système (15) de séparation de longueurs d'ondes est un réseau de diffraction formé sur la face plane (23) de l'élément (2) séparateur de longueurs d'ondes.

3. Multiplexeur-démultiplexeur selon la revendication 1, caractérisé par le fait que le système (15) de séparation de longueurs d'ondes est constitué par un ensemble de miroirs plans à couches filtrantes multidiélectriques présentant des inclinaisons différentes sur l'axe du miroir sphérique (8).

4. Mulitplexeur-démultiplexeur selon l'une quelconque des revendications 1 à 3, caractérisé par le fait que l'indice n de l'élément intermédiaire (3) est supérieur à l'indice n' de l'élément miroir (4) et par le fait que l'élément miroir (14) est biconvexe.

5. Multiplexeur-démultiplexeur selon l'une quelconque des revendications 1 à 3, caractérisé par le fait que l'indice n de l'élément intermédiaire (3) est inférieur à l'indice n' de l'élément miroir (4) et par le fait que la concavité de la surface sphérique (34) entre l'élément miroir (4) et l'élément intermédiaire (3) est dirigée dans le même sens que celle du miroir (8).

6. Mulitplexeur-démultiplexeur selon l'une quelconque des revendications précédentes, caractérisé par le fait que l'élément intermédiaire (3) est lui-même constitué en deux parties (31, 32) séparées par une surface plane (35).

**Patentansprüche**

1. Mehrkanalgerät vom Typ eines Multiplex-Endmultiplexgeräts, bei dem Lichtstrahlen unterschiedlicher Wellenlängen gemischt bzw. getrennt werden und von optischen Übertragungsfasern geleitet werden, deren Enden unmittelbar dem Brennpunkt eines Konkavspiegels (8) benachbart angeordnet sind, der mit einem Trennsystem (15) für die Wellenlängen verbunden ist, wobei weiterhin wenigstens vier transparente Elemente nacheinander aufeinandergeklebt sind, nämlich:

a) Ein die Fasern tragendes Element (1), in das die Fasern (9) eingebettet sind am Einang und am Ausgang, wobei deren Enden an eine ebene Fläche (12) für den Kontakt mit dem folgenden Element anliegen,

b) ein Element (2) das das Trennsystem (15) für die Wellenlängen trägt, mit einer ebenen Fläche (12) für den Kontakt mit dem Tragelement (1) für die Fasern und mit einer entgegengesetzten ebenen Fläche (23) für den Kontakt mit dem folgenden Element,

c) ein Zwischenelement (3) mit demselben Brechungsindex n wie das Element (2), das das System (15) für die Trennung der Wellenlängen trägt, mit einer ebenen Fläche (23) für den Kontakt mit dem Element (2), das das System für die Trennung der Wellenlängen trägt und

d) ein Spiegelelement (4) mit einer Kugelfäche (8), die zum Zwischenelement (3) konkav ausgebildet ist und die so behandelt ist, daß sie den konkaven Spiegel ausbildet, wobei der Brechungsindex n' unterschiedlich vom Brechungsindex n des Zwischenelements (3) ausgebildet ist, dadurch gekennzeichnet, daß das Zwischenelement eine Kugelfläche (34) für den Kontakt mit dem folgenden Element hat und daß das Spiegelelement eine Kugelfläche (34) für den Kontakt mit dem Zwischenelement (3) hat und daß die Materialien des Zwischenelements (3) und des Spiegelelements (4) derart ausgewählt sind, daß sie soweit wie möglich benachbarte chromatische Dispersionen aufweisen, wobei die Krümmung der Kugelfläche (34) zwischen dem Spiegelelement (4) und dem Zwischenelement (3) und die Richtung der Konkavität bezogen auf diejenige des Spiegels in Abhängigkeit von den Brechungsindizes n und n' bestimmt ist, um die longitudinalen sphärischen Aberrationen des Spiegels zu kompensieren.

2. Mehrkanalgerät nach Anspruch 1, dadurch gekennzeichnet, daß das System (15) für die Trennung der Wellenlängen als Beugungsgitter auf der ebenen Fläche (23) des Trennelements (2) für die Wellenlängen ausgebildet ist.

3. Mehrkanalgerät nach Anspruch 1, dadurch gekennzeichnet, daß das System (15) für die Trennung der Wellenlängen von einer Gesamtheit von ebenen Spiegeln mit multidielektrischen Filterschichten ausgebildet ist, die unterschiedliche Neigungen mit der Achse des kugelförmigen Spiegels (8) einschließen.

4. Mehrkanalgerät nach einem der Ansprüche 1 bis 3, dadurch gekennzeichnet, daß der Brechungsindex n des Zwischenelements (3) größer ist als der Brechungsindex n' des Spiegelelements (4), wobei das Spiegelelement (14) biconvex ist.

5. Mehrkanalgerät nach einem der Ansprüche 1 bis 3, dadurch gekennzeichnet, daß der Brechungsindex n des Zwischenelements (3) kleiner ist als der Brechungsindex n' des Spiegelelements

(4), wobei die Konkavität der Kugelfläche (34) zwischen dem Spiegelelement (4) und dem Zwischenelement (3) in dem gleichen Sinne ausgerichtet ist wie diejenige des Spiegels (8).

6. Mehrkanalgerät nach einem der vorhergehenden Ansprüche, dadurch gekennzeichnet, daß das Zwischenelement (3) aus zwei Teilen (31, 32) besteht, die durch eine ebene Fläche (35) voneinander getrennt sind.

**Claims**

1. Multiplexer-demultiplexer of the type in which the optical radiations of differing wavelengths to be mixed or to be separated are carried by transmission optical fibres, the ends of which are disposed in the immediate vicinity of the focus of a concave mirror (8) associated with a wavelength separation system (15), comprising at least four transparent elements cemented to one another, in succession:

a) a fibre-carrying element (1) in which the entrance and exit fibres (9) are embedded, with their ends flush on a plane surface (12) of contact with the following element,

b) an element (2) carrying the wavelength separation system (15), with a plane surface (12) of contact with the fibre-carrying element (1) and an opposite plane face (23) of contact with the following element,

c) an intermediate element (3) of the same index n as the element (2) carrying the wavelength separation system (15), with a plane face (23) of contact with the element carrying the wavelength separation system (2) and

d) a mirror element (4) with a spherical face (8), concave towards the intermediate element (3) and processed to constitute the said concave mirror, and of index n' different from the index n of the intermediate element (3), characterized in that the intermediate element has a spherical face (34) of contact with the following element, in that the mirror element has a spherical face (34) of contact with the intermediate element (3), and in that the materials of the intermediate (3) and mirror (4) elements being chosen in such a manner as to exhibit chromatic dispersions which are as close as possible, the curvature of the spherical face (34) between the mirror element (4) and the intermediate element (3) and the direction of its concavity in relation to that of the mirror being determined as a function of the indices n and n' to compensate the longitudinal spherical aberrations of the mirror.

2. Multiplexer-demultiplexer according to Claim 1, characterized in that the walvelength separation system (15) is a diffraction grating formed on the plane face (23) of the wavelength separator element (2).

3. Multiplexer-demultiplexer according to Claim 1, characterized in that the wavelength separation system (15) consists of a set of plane mirrors having mulitdielectric filtering layers exhibiting differing inclinations with respect ot the axis of the spherical mirror (8).

4. Multiplexer-demultiplexer according to any one of Claims 1 to 3, characterized in that the index n of the intermediate element (3) is greater than the index n' of the mirror element (4), and in that the mirror element (14) is biconvex.

5. Multiplexer-demultiplexer according to any one of Claims 1 to 3, characterized in that the index n of the intermediate element (3) is less than index n' of the mirror element (4) and in that the concavity of the spherical surface (34) between the mirror element (4) and the intermediate element (3) is directed in the same direction as that of the mirror (8).

6. Multiplexer-demultiplexer according to any one of the preceding Claims characterized in that the intermediate element (3) itself consists of two parts (31, 32) separated by a plane surface (35).

FIG.1

FIG.2

FIG.3